# EUROPÄISCHE PATENTANMELDUNG

(11) **EP 4 009 035 A1**
(43) Veröffentlichungstag der Anmeldung: **08.06.2022**
(21) Anmeldenummer: 20212249.5
(22) Anmeldetag: 07.12.2020
(51) Int. Cl.: G01N 21/17, G01N 21/27

(54) **PHOTOAKUSTISCHES SONAR-SPEKTROMETER**

(71) Anmelder: Fraunhofer-Gesellschaft zur Förderung der angewandten Forschung e.V., 80686 München (DE)
(72) Erfinder: Wolf, Sebastian, 79110 Freiburg (DE); Kießling, Jens, 79110 Freiburg (DE); Kühnemann, Frank, 79110 Freiburg (DE); Trendle, Tobias, 79110 Freiburg (DE)
(74) Vertreter: WSL Patentanwälte Partnerschaft mbB

(57) **Zusammenfassung**

Die vorliegende Erfindung betrifft ein Verfahren zur Spektroskopie an einer Probe, wobei das Verfahren die Messschritte aufweist, Erzeugen elektromagnetischer Anregungsstrahlung mit einer Mehrzahl von über eine Anregungsbandbreite verteilten Anregungsfrequenzen, Modulieren einer Intensität der Anregungsstrahlung bei jeder aus der Mehrzahl von Anregungsfrequenzen mit einer Modulationsfrequenz, räumliches Aufspalten der Anregungsstrahlung in Abhängigkeit von der Mehrzahl von Anregungsfrequenzen, Beleuchten der Probe mit der räumlich aufgespaltenen Anregungsstrahlung an einer Mehrzahl von Anregungsorten in oder auf der Probe, sodass die Mehrzahl von Anregungsfrequenzen der Anregungsstrahlung über die Mehrzahl von Anregungsorten in oder auf der Probe verteilt ist, an einer Mehrzahl von Erfassungspositionen, Erfassen zumindest einer Amplitude oder einer Phase einer Mehrzahl von Schallwellen, die von der Anregungsstrahlung an der Mehrzahl von Anregungsorten in oder auf der Probe erzeugt werden, und Bestimmen eines Maßes für eine Absorption der Anregungsstrahlung durch die Probe in Abhängigkeit von der Mehrzahl von Anregungsfrequenzen aus einer räumlichen Verteilung zumindest der Amplitude oder der Phase des Schallwellen über die Mehrzahl von Erfassungspositionen.

## Beschreibung

Die vorliegende Erfindung betrifft ein Verfahren zur photoakustischen Spektroskopie an einer Probe sowie ein photoakustisches Spektrometer zum Bestimmen einer wellenlängenabhängigen Absorption einer Probe.

Die spektroskopische Detektion molekularer Bestandteile von Fluiden, d. h. Gasen oder Flüssigkeiten ist seit langem Bestandteil der chemischen Analytik. Im zunehmenden Maße werden spektroskopische Detektoren zum Spurengasnachweis oder zur Konzentrationsüberwachung von gesundheits- und umweltschädlichen Stoffen in vielen Anwendungsumgebungen eingesetzt.

Hierzu wird meist die direkte Absorptionsspektroskopie verwendet. Das gemessene Signal ist dabei die spektral abhängige Dämpfung der elektromagnetischen Strahlung einer Lichtquelle durch den zu erfassenden Stoff. Gemessen wird die Leistung der elektromagnetischen Strahlung, welche hinter der Probe auf einen Detektor fällt.

Für die spektroskopische Detektion molekularer Bestandteile von Gasen oder Flüssigkeiten sind grundsätzlich auch photoakustische Messverfahren geeignet. Bei diesen wird die Dämpfung der elektromagnetischen Anregungsstrahlung durch die Probe indirekt erfasst. Absorbiert die Probe die elektromagnetische Strahlung, so wird aufgrund der Erwärmung der Probe eine Druckwelle in der Probe erzeugt. Diese Druck- oder Schallwelle wird mit Hilfe einer entsprechenden Detektionseinrichtung erfasst. Amplitude und Phase der erfassten Schallwelle dienen dann als Maß für die Absorption der elektromagnetischen Anregungsstrahlung durch die Probe. Die photoakustischen Messverfahren bieten den Vorteil eines Messsignals gegen Null. Wenn die Probe die elektromagnetische Strahlung nicht absorbiert, so wird keine Schallwelle erzeugt und es ist kein Signal messbar. Darüber hinaus erreichen die photoakustischen Messverfahren in bestimmten Varianten extreme Empfindlichkeiten bei dem Nachweis von Spurengasen.

Die spektrale Information, welche ein photoakustisches Messverfahren bereitstellt, ist bei den aus dem Stand der Technik bekannten Verfahren und Vorrichtungen durch eine schmalbandige Anregungsstrahlung gegeben. Eine spezifische Anregungsfrequenz der Anregungsstrahlung ist in der Regel selektiv empfindlich für genau ein Molekül. Mit einer schmalbandigen Laserlichtquelle zur Erzeugung der Anregungsstrahlung lässt sich in der Regel nur eine einzige Spezies von Molekülen erfassen oder die schmalbandige Strahlung muss durgestimmt werden. Die erforderlichen Laserlichtquellen sind zudem, insbesondere im mittleren infraroten Spektralbereich, ein erheblicher Kostenfaktor beim Einsatz solcher photoakustischer Detektoren.

Demgegenüber ist es Aufgabe der vorliegenden Erfindung, eine preisgünstigere Möglichkeit zur Realisierung eines photoakustischen Messverfahrens bereitzustellen. Zudem ist eine Aufgabe der vorliegenden Erfindung, ein Verfahren und ein Spektrometer bereitzustellen, welche die Verwendung einer breitbandigen Quelle für die elektromagnetische Anregungsstrahlung ermöglichen.

Zumindest eine der zuvor genannten Aufgaben wird durch ein Verfahren zur Spektroskopie an einer Probe gelöst, wobei das Verfahren die Messschritte aufweist, Erzeugen elektromagnetischer Anregungsstrahlung mit einer Mehrzahl von über eine Anregungsbandbreite verteilten Anregungsfrequenzen, Modulieren einer Intensität der Anregungsstrahlung bei jeder aus der Mehrzahl von Anregungsfrequenzen mit einer Modulationsfrequenz, räumliches Aufspalten der Anregungsstrahlung in Abhängigkeit von der Mehrzahl von Anregungsfrequenzen, Beleuchten der Probe mit der räumlich aufgespaltenen Anregungsstrahlung an einer Mehrzahl von Anregungsorten in oder auf der Probe, sodass die Mehrzahl von Anregungsfrequenzen der Anregungsstrahlung über die Mehrzahl von Anregungsorten in oder auf der Probe verteilt ist, an einer Mehrzahl von Erfassungspositionen, Erfassen zumindest einer Amplitude oder einer Phase einer Mehrzahl von Schallwellen, die von der Anregungsstrahlung an der Mehrzahl von Anregungsorten in oder auf der Probe erzeugt werden, und Bestimmen eines Maßes für eine Absorption der Anregungsstrahlung durch die Probe in Abhängigkeit von der Mehrzahl von Anregungsfrequenzen aus einer räumlichen Verteilung zumindest der Amplitude oder der Phase des Schallwellen über die Mehrzahl von Erfassungspositionen.

Die grundlegende Idee der vorliegenden Erfindung ist es, eine breitbandige Anregungsstrahlung, die beispielsweise mit einer Leuchtdiode oder einem thermischen Strahler erzeugt wird, bereitzustellen. Die Anregungsstrahlung wird dann, vorzugsweise periodisch, moduliert, sodass die Intensität der Anregungsstrahlung bei jeder aus der Mehrzahl von Anregungsfrequenzen mit einer Modulationsfrequenz moduliert ist. Durch die Modulation der Intensität der Anregungsstrahlung tritt die Absorption der Anregungsstrahlung bei einer Anregungsfrequenz ebenfalls zeitlich moduliert auf, sodass die Druckänderung aufgrund der Erwärmung der Probe ebenfalls moduliert ist, was zur Erzeugung einer Schallwelle führt.

Dabei erfolgt das Modulieren der Intensität der Anregungsstrahlung in einer Ausführungsform bei jeder aus der Mehrzahl von Anregungsfrequenzen mit der gleichen Modulationsfrequenz. Eine solche Ausführungsform ermöglicht es, das Modulieren auf einfache Art und Weise durchzuführen.

Beispielsweise kann der Strom, welcher die Quelle für die Anregungsstrahlung treibt mit der Modulationsfrequenz moduliert werden. Die gesamte von der Quelle emittierte Anregungsstrahlung hat dann über die gesamte Bandbreite, d. h. alle aus der Mehrzahl von Anregungsfrequenzen hinweg die gleiche Modulationsfrequenz. Auf ähnliche Weise einfach ist eine Ausführungsform, bei welcher die Anregungsstrahlung mit einem mechanischen Chopper, d.h. einem sich drehenden Lochblendenrad, erfolgt.

In einer alternativen Ausführungsform wird die Intensität der Anregungsstrahlung so moduliert, dass verschiedene Anregungsfrequenzen aus der Mehrzahl von Anregungsfrequenzen mit voneinander verschiedenen Modulationsfrequenzen moduliert sind. Eine derartige Modulation mit einer von der Anregungsfrequenz abhängigen Modulationsfrequenz lässt sich beispielsweise mit räumlichen Modulatoren für die elektromagnetische Strahlung (Englisch: Spatial Light Modulator; kurz: SLM) realisieren. Ein Beispiel für einen solchen SLM ist ein Digital Micro Mirror Device (DLP).

In einer Ausführungsform der Erfindung liegt die Modulationsfrequenz in einem Bereich von 10 Hz bis 100 kHz, vorzugsweise in einem Bereich von 100 Hz bis 5 kHz. Die Wahl der Modulationsfrequenz wird neben den akustischen Gegebenheiten auch von der Wahl der Quelle für die Anregungsstrahlung bestimmt. So lassen sich thermische Glühstrahler in der Regel eher mit einer niedrigeren Modulationsfrequenz modulieren, während beispielsweise Leuchtdioden hohe Modulationsfrequenzen zulassen. In einer Ausführungsform liegt die Modulationsfrequenz in einem Bereich von 10 Hz bis 100 Hz, in einer weiteren Ausführungsform in einem Bereich von 5 kHz bis 100 kHz.

Erfindungsgemäß wird die Anregungsstrahlung räumlich in Abhängigkeit von der Mehrzahl von Anregungsfrequenzen aufgespalten. Eine solche räumliche Aufspaltung der Anregungsstrahlung erfolgt in einer Ausführungsform mit einem dispersiven Element, beispielsweise einem Prisma oder einem Gitter.

Während in einer Ausführungsform der Erfindung örtlich betrachtet das Modulieren der Intensität vor dem räumlichen Aufspalten erfolgt, sind Ausführungsformen denkbar, bei denen das Modulieren örtlich hinter dem Aufspalten erfolgt. Beispielsweise ist in einer Ausführungsform der Erfindung der Chopper in Strahlrichtung hinter der Quelle und vor oder hinter dem dispersiven Element angeordnet.

In einer Ausführungsform der Erfindung erfolgt das Modulieren der Intensität der Anregungsstrahlung impulsförmig, sinusförmig oder rechteckförmig.

Erfindungsgemäß erfolgt das Beleuchten der Probe mit der räumlich aufgespaltenen Anregungsstrahlung. In der oder auf der Probe verteilt sich dann die Anregungsstrahlung so, dass die Mehrzahl von Anregungsfrequenzen der Anregungsstrahlung über eine Mehrzahl von Anregungsorten in oder auf der Probe verteilt ist. Mit anderen Worten ausgedrückt erfolgt eine Anregung der Probe an einem Anregungsort der Probe immer nur mit der Anregungsstrahlung mit einer aus der Mehrzahl von Anregungsfrequenzen.

In einer Ausführungsform der Erfindung erfolgt das Beleuchten der Probe gleichzeitig mit der Mehrzahl von Anregungsfrequenzen an der Mehrzahl von Anregungsorten in oder auf der Probe. In diesem Fall werden an den verschiedenen Anregungsorten in oder auf der Probe gleichzeitig Schallwellen generiert, die einander in der Probe überlagern.

In einer Ausführungsform erfolgt das Beleuchten der Probe gleichzeitig mit der Mehrzahl von Anregungsfrequenzen, wobei die Intensität der Anregungsstrahlung bei jeder aus der Mehrzahl von Anregungsfrequenzen mit der gleichen Modulationsfrequenz moduliert ist. Eine derartige Ausführungsform ist einfach zu realisieren und ermöglicht über die erfindungsgemäß ortsaufgelöste Messung der Amplituden oder der Phasen der Mehrzahl von Schallwellen dennoch eine Aussage über die spektrale Abhängigkeit der Absorption der Anregungsstrahlung durch die Probe.

In einer alternativen Ausführungsform erfolgt das Beleuchten der Probe mit der Mehrzahl von Anregungsfrequenzen an der Mehrzahl von Anregungsorten zeitlich nacheinander. In diesem Fall werden auch die Schallwellen an der Mehrzahl von Anregungsorten in oder auf der Probe zeitlich nacheinander generiert. Das Erfassen der Schallwellen erfolgt in diesem Fall seriell für die Mehrzahl von Anregungsorten.

Erfindungsgemäß wird zumindest die Amplitude oder die Phase der Mehrzahl von Schallwellen, die von der Anregungsstrahlung an der Mehrzahl von Anregungsorten in oder auf der Probe erzeugt werden, an einer Mehrzahl von Erfassungspositionen erfasst. Dabei versteht sich, dass an diesen Erfassungspositionen entsprechende Detektionseinrichtungen zum Erfassen der Amplitude oder der Phase der Mehrzahl von Schallwellen vorgesehen sind.

Aus den erfassten Amplituden und/oder Phasen der Schallwellen wird dann erfindungsgemäß ein Maß für die Absorption der Anregungsstrahlung durch die Probe bestimmt. Da die Probe erfindungsgemäß mit einer Mehrzahl von Anregungsfrequenzen, d. h. über eine vergleichsweiße große Anregungsbandbreite hinweg, an verschiedenen Anregungsorten beleuchtet wird, lässt sich aus der räumlichen Verteilung der Amplituden und Phasen der Schallwellen das Maß für die Absorption der Anregungsstrahlung in Abhängigkeit von der Mehrzahl von Anregungsfrequenzen, d. h. spektral aufgelöst, bestimmen.

Das erfindungsgemäße Verfahren ermöglicht somit die empfindliche spektroskopische Überwachung eines frei wählbaren Spektralbereichs, der gleich der Anregungsbandbreite ist, zur Detektion und Qualifizierung einer oder mehrerer Komponenten in der Probe, insbesondere in einem Gas oder einer Flüssigkeit.

Ein weiterer Vorteil ist, dass das erfindungsgemäße Verfahren den Einsatz kostenintensiver Komponenten, insbesondere optischer Zeilendetektoren oder Laserlichtquellen von spektroskopischer Qualität, überflüssig macht.

In einer Ausführungsform der Erfindung erfolgt das Beleuchten der Probe derart, dass ein Anregungsvolumen der Probe in dem die Anregungsorte liegen, in einer ersten Richtung länger ist als in einer zu der ersten Richtung senkrechten zweiten Richtung, wobei die Mehrzahl von Anregungsfrequenzen in der ersten Richtung verteilt ist. Mit anderen Worten ausgedrückt erfolgt das Beleuchten der Probe in einer solchen Ausführungsform im Wesentlichen linienförmig.

In einer Ausführungsform der Erfindung, bei der das Beleuchten der Probe im Wesentlichen linienförmig erfolgt, sind die Erfassungspositionen ebenfalls im Wesentlichen linienförmig angeordnet. Dabei sind die Linie, auf welcher die Anregungsorte liegen, und die Linie, auf welcher die Erfassungspositionen liegen, vorzugsweise im Wesentlichen parallel zueinander.

Um aus der räumlichen Verteilung der Amplituden oder der Phasen der Mehrzahl von Schallwellen über die Mehrzahl von Erfassungspositionen ein Maß für die frequenzabhängige Absorption der Anregungsstrahlung durch die Probe zu gewinnen, weist in einer Ausführungsform der Erfindung das Verfahren zusätzlich vor den Messschritten Kalibrierschritte auf. Mit diesen Kalibrierschritten wird eine Kalibrierung des Messverfahrens bzw. des photoakustischen Spektrometers mit einer Mehrzahl von Kalibrierproben mit jeweils einer bekannten Abhängigkeit der Absorption von elektromagnetischer Anregungsstrahlung in Abhängigkeit von der Mehrzahl von Anregungsfrequenzen bereitgestellt.

In einer Ausführungsform der Erfindung erfolgt die Kalibrierung herkömmlich durch die Zuordnung von einem oder mehreren Messwerten zu einer spektralen Charakteristik der Absorption für jede aus einer Mehrzahl von Kalibrierproben.

Daher weist das Verfahren in einer Ausführungsform der Erfindung zusätzlich vor den Messschritten Kalibrierschritte auf mit Erzeugen elektromagnetischer Anregungsstrahlung mit der Mehrzahl der über die Anregungsbandbreite verteilten Anregungsfrequenzen, Modulieren der Intensität der Anregungsstrahlung, räumliches Aufspalten der Anregungsstrahlung in Abhängigkeit von der Mehrzahl von Anregungsfrequenzen, Beleuchten einer Kalibrierprobe mit einer bekannten Absorption in Abhängigkeit von der Anregungsfrequenz gleichzeitig mit der Mehrzahl von Anregungsfrequenzen oder nacheinander mit jeweils einer aus der Mehrzahl von Anregungsfrequenzen aus der räumlich aufgespaltenen Anregungsstrahlung an der Mehrzahl von Anregungsorten in oder auf der Kalibrierprobe, sodass die Mehrzahl von Anregungsfrequenzen der Anregungsstrahlung über die Mehrzahl von Anregungsorten in oder auf der Kalibrierprobe verteilt ist, und an der Mehrzahl von Erfassungspositionen erfassen zumindest einer Amplitude oder einer Phase einer Mehrzahl von Schallwellen, die von der Anregungsstrahlung gleichzeitig oder nacheinander an einer Mehrzahl von Anregungsorten in oder auf der Kalibrierprobe erzeugt werden, Bestimmen einer räumlichen Vergleichsverteilung zumindest der Amplitude oder der Phase über eine Mehrzahl von Erfassungspositionen für jede aus der Mehrzahl von Anregungsfrequenzen, Wiederholen der vorhergehenden Kalibrierschritte für eine Mehrzahl von voneinander verschiedenen Kalibrierproben mit jeweils einer bekannten Absorption in Abhängigkeit von der Anregungsfrequenz und Erstellen einer Zuordnung zwischen jeder der für die Mehrzahl von Kalibrierproben erfassten räumlichen Vergleichsverteilungen zumindest der Amplitude oder der Phase und jeweils einem Maß für die Absorption der Anregungsstrahlung bei der Mehrzahl von Anregungsfrequenzen, wobei das Bestimmen des Maßes für die Absorption der Anregungsstrahlung durch die Probe in Abhängigkeit von der Mehrzahl von Anregungsfrequenzen einen Vergleich der für die Probe erfassten räumlichen Verteilung zumindest der Amplitude oder der Phase mit den Vergleichsverteilungen umfasst.

In Abhängigkeit davon, ob die jeweilige Kalibrierprobe gleichzeitig oder nacheinander an der Mehrzahl von Anregungsorten mit der Anregungsstrahlung mit unterschiedlichen Anregungsfrequenzen beleuchtet wird, kann das Kalibrierverfahren als paralleles oder serielles Kalibrierverfahren bezeichnet werden.

In einer alternativen Ausführungsform erfolgt das Bestimmen des Maßes für die Absorption der Anregungsstrahlung durch die Probe in Abhängigkeit von der Mehrzahl von Anregungsfrequenzen nicht algorithmisch, sondern mit Hilfe einer Mustererkennung in einem künstlichen neuronalen Netzwerk.

Es versteht sich, dass in einer solchen Ausführungsform das Kalibrierverfahren ein Verfahren zum Trainieren des künstlichen neuronalen Netzwerks ist. Daher umfasst das erfindungsgemäße Verfahren in einer Ausführungsform vor den Messschritten ein Trainieren des künstlichen neuronalen Netzwerks mit einem Trainingsdatensatz. Dabei weist der Trainingsdatensatz eine Mehrzahl von Datenblöcken auf, wobei der Trainingsdatensatz mit folgenden Trainingsschritten erstellt wird: Erzeugen elektromagnetischer Anregungsstrahlung mit der Mehrzahl der über die Anregungsbandbreite verteilten Anregungsfrequenzen, Modulieren der Intensität der Anregungsstrahlung, räumliches Aufspalten der Anregungsstrahlung in Abhängigkeit von der Mehrzahl von Anregungsfrequenzen, Beleuchten einer Kalibrierprobe mit einer bekannten Absorption in Abhängigkeit von der Anregungsfrequenz mit der Mehrzahl von Anregungsfrequenzen aus der räumlich aufgespaltenen Anregungsstrahlung an der Mehrzahl von Anregungsorten in oder auf der Kalibrierprobe, sodass die Mehrzahl von Anregungsfrequenzen der Anregungsstrahlung über die Mehrzahl von Anregungsorten in oder auf der Kalibrierprobe verteilt ist, an der Mehrzahl von Erfassungspositionen erfassen zumindest der Amplitude oder der Phase einer oder einer Mehrzahl von Schallwellen, die von der Anregungsstrahlung an der Mehrzahl von Anregungsorten in oder auf der Kalibrierprobe erzeugt werden, Bestimmen einer räumlichen Trainingsverteilung zumindest der Amplitude oder der Phase über die Mehrzahl von Erfassungspositionen für die Mehrzahl von Anregungsfrequenzen als Datenblock des Trainingsdatensatzes und Wiederholen der vorhergehenden Trainingsschritte für eine Mehrzahl von voneinander verschiedenen Kalibrierproben mit jeweils einer bekannten Absorption in Abhängigkeit von der Anregungsfrequenz der Anregungsstrahlung.

Das erfindungsgemäße Verfahren ist grundsätzlich für Proben in Form von Festkörpern, Flüssigkeiten und Gasen geeignet. Insbesondere ist jedoch die Probe eine gasförmige Probe.

Zumindest eine der zuvor genannten Aufgaben wird auch durch ein photoakustisches Spektrometer zum Bestimmen einer wellenlängenabhängigen Absorption eine Probe gelöst.

Soweit im folgenden Aspekte der Erfindung im Hinblick auf das photoakustische Spektrometer beschrieben werden, so gelten diese auch für das zuvor beschriebene Verfahren zur Spektroskopie an einer Probe und umgekehrt. Soweit das Verfahren mit einem Spektrometer gemäß dieser Erfindung ausgeführt wird, so weist dieses die entsprechenden Einrichtungen hierfür auf. Insbesondere sind Ausführungsformen des photoakustischen Spektrometers zum Ausführen zuvor beschriebener Ausführungsformen des Verfahrens geeignet.

Erfindungsgemäß ist das Spektrometer versehen mit einer Quelle, die derart eingerichtet ist, dass die Quelle in einem Betrieb des Spektrometers elektromagnetische Anregungsstrahlung mit einer Mehrzahl von über eine Anregungsbandbreite verteilten Anregungsfrequenzen erzeugt und abstrahlt, einem Modulator, der derart eingerichtet und angeordnet ist, dass der Modulator in dem Betrieb des Spektrometers eine Intensität aller Anregungsfrequenzen der von der Quelle abgestrahlten Anregungsstrahlung mit einer Modulationsfrequenz moduliert, einem dispersiven Element, das derart ausgestaltet und angeordnet ist, dass das dispersive Element in dem Betrieb des Spektrometers die Anregungsstrahlung in Abhängigkeit von der Mehrzahl von Anregungsfrequenzen räumlich aufspaltet, einer Detektionseinrichtung und einer Auswerteeinrichtung, wobei die Auswerteeinrichtung derart wirksam mit der Detektionseinrichtung verbunden ist, dass die Auswerteeinrichtung in dem Betrieb des Spektrometers ein Messsignal von der Detektionseinrichtung erhält, wobei die Quelle, der Modulator und das dispersive Element derart angeordnet und eingerichtet sind, dass in dem Betrieb des Spektrometers die Probe derart mit der räumlich aufgespaltenen Anregungsstrahlung an einer Mehrzahl von Anregungsorten in oder auf der Probe beleuchtbar ist, dass die Mehrzahl von Anregungsfrequenzen der Anregungsstrahlung über die Mehrzahl von Anregungsorten in oder auf der Probe verteilt ist, wobei die Detektionseinrichtung derart eingerichtet und angeordnet ist, dass mit der Detektionseinrichtung in dem Betrieb der Vorrichtung zumindest eine Amplitude oder eine Phase eine Mehrzahl von Schallwellen, die von der Anregungsstrahlung an der Mehrzahl von Anregungsorten erzeugt wurden, an einer Mehrzahl von Erfassungspositionen erfassbar ist, und wobei die Auswerteeinrichtung derart eingerichtet ist, dass die Auswerteeinrichtung in dem Betrieb des Spektrometers ein Maß für eine Absorption der Anregungsstrahlung durch die Probe in Abhängigkeit von der Mehrzahl von Anregungsfrequenzen aus einer räumlichen Verteilung zumindest der Amplitude oder der Phase über die Mehrzahl von Erfassungspositionen bestimmt.

In einer Ausführungsform der Erfindung umfasst die Detektionseinrichtung eine Mehrzahl von Schallmesseinrichtungen, von denen jeweils eine an jeder der Erfassungspositionen angeordnet ist. Dabei ist eine Ausführungsform der Erfindung die Schallmesseinrichtung ein Wechseldruckwandler oder ein Wechselflusswandler, insbesondere ein Wechselgasflusswandler.

Ein Beispiel für einen Wechseldruckwandler ist ein Mikrofon, wobei es auf die konkrete Bauart des Mikrofons erfindungsgemäß nicht ankommt. Ein Wechseldruckwandler erfasst eine Druckänderung in der Probe, mit welcher der Wandler in Kontakt ist.

Dabei ist der Wechseldruckwandler in einer Ausführungsform in einem Druckmaximum, d. h. einem Schwingungsknoten der Schallwelle oder in einem Bereich um das Druckmaximum herum angeordnet.

Ein Wechselflusswandler hingegen erfasst eine Änderung eines Flusses in der Probe, d. h. insbesondere eines Flusses eines Fluides wie einer Flüssigkeit oder eines Gases, welches den Wandler umgibt. Ein Beispiel für einen Wechselflusswandler ist eine Messeinrichtung, die auf einer Temperaturänderung eines Drahtes beruht, wobei sich der Draht in der Schallwelle befindet.

In einer weiteren Ausführungsform ist der Wechselflusswandler in einem Auslenkungsmaximum, d. h. einem Druckknoten der Schallwelle, oder in einem Bereich um das Auslenkungsmaximum herum, angeordnet.

In einer Ausführungsform, bei welcher die Detektionseinrichtung eine Mehrzahl von Schallmesseinrichtungen aufweist, wobei an jeder der Erfassungspositionen eine Schallmesseinrichtung angeordnet ist, sind die Schallmesseinrichtungen laufzeitsensitiv, d. h. phasenempfindlich für die Phase der jeweiligen Schallwellen.

Durch Zusammenschalten mehrerer linienförmiger Anordnungen, von denen jede eine Mehrzahl von Schallmesseinrichtungen an einer Mehrzahl von Erfassungspositionen aufweist, oder mehrerer komplexer räumlicher Anordnungen jeweils einer Mehrzahl von Schallerfassungseinrichtungen um eine Achse der Linie der Anregungsorte herum kann die Empfindlichkeit der akustischen Messung gegenüber Störeinflüssen von außen reduziert werden.

In einer Ausführungsform der Erfindung ist die Quelle für die Anregungsstrahlung ein Glühstrahler, eine Blitzlampe oder eine Superkontinuumsquelle. Derartige Quellen haben den Vorteil, dass sie breitbandig sind. Sie stellen die Anregungsstrahlung mit einer Mehrzahl von Anregungsfrequenzen, die über die Anregungsbandbreite verteilt sind, bereit. Darüber hinaus sind Glühstrahler oder Blitzlampen zumeist preisgünstiger als herkömmliche kohärente Quellen wie Diodenlaser.

In einer Ausführungsform weist die Quelle für die Anregungsstrahlung eine Bandbreite in einem Bereich von 1.000 cm⁻¹ bis 12.000 cm⁻¹, vorzugsweise in einem Bereich von 2.000 bis 6.000 cm⁻¹ auf.

In einer Ausführungsform der Erfindung umfasst das Spektrometer eine Probenkammer oder Probenzelle zum Aufnehmen der Probe, wobei die Probe insbesondere gasförmig oder flüssig ist.

In einer Ausführungsform der Erfindung weist das Spektrometer keine Probenzelle auf. Die Anregungsstrahlung wird auf eine Linie in der Umgebung des Spektrometers abgebildet. Auf diese Weise kann ohne Probennahme das umliegende Medium als Probe analysiert werden.

In einer Ausführungsform der Erfindung weist das Spektrometer eine abbildende Optik auf zum Abbilden der räumlich aufgespaltenen Anregungsstrahlung entlang einer Linie senkrecht zu einer Strahlrichtung der Anregungsstrahlung auf die Probe. In einer Ausführungsform der Erfindung fokussiert die abbildende Optik die räumlich aufgespaltene Anregungsstrahlung entlang der Linie in oder auf die Probe.

In einer weiteren Ausführungsform erzeugt die abbildende Optik eine Tiefenschärfe, wobei die Tiefenschärfe eine Länge eines Bereichs in Strahlrichtung ist, indem die Flächenleistungsdichte der Anregungsstrahlung größer oder gleich der Hälfte einer maximalen Flächenleistungsdichte der abgebildeten Anregungsstrahlung ist, und wobei die Tiefenschärfe kleiner ist als ein Zehntel einer maximalen Ausdehnung der Linie senkrecht zu der Strahlrichtung. Das Einhalten der geforderten Tiefenschärfe bewirkt eine harte Fokussierung der Anregungsstrahlung in oder auf die Probe. Volumenausdehnung der fokussierten Linie der Anregungsstrahlung in oder auf der Probe in Bezug auf ihre Höhe und Tiefe ist damit möglichst klein. Die Entstehung der Schallwellen entlang der Anregungsorte ist somit möglichst eng lokalisiert.

Dabei ist in einer Ausführungsform der Erfindung die Ausdehnung der Linie senkrecht zu der Strahlrichtung gemessen als derjenige Bereich, in dem die Flächenleistungsdichte der Anregungsstrahlung größer oder gleich der Hälfte einer maximalen Flächenleistungsdichte der abgebildeten Anregungsstrahlung ist.

Weitere Vorteile, Merkmale und Anwendungsmöglichkeiten der vorliegenden Erfindung werden anhand der folgenden Beschreibung einer Ausführungsform und der dazugehörigen Figur deutlich.

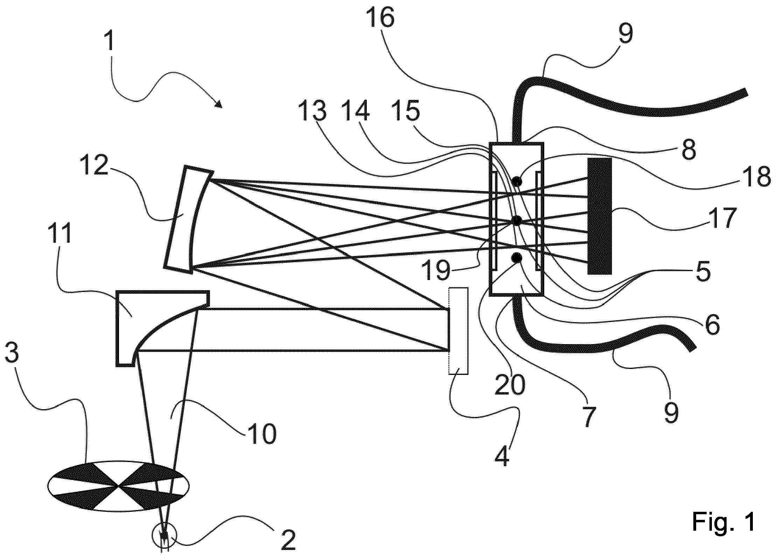

- Figur 1: ist eine schematische Darstellung einer Ausführungsform eines photoakustischen Spektrometers gemäß der vorliegenden Erfindung.

Das photoakustische Spektrometer 1 aus Figur 1 umfasst einen thermischen Glühstrahler 2 als Strahlungsquelle, ein mechanisches Chopper-Rad 3 als Modulator, ein Gitter 4 als dispersives Element sowie drei Mikrofone 5 als Teile einer Detektionseinrichtung im Sinne der vorliegenden Anmeldung.

Die Mikrofone 5 sind in einer Probenzelle 6 angeordnet. Diese Probenzelle 6 dient der Aufnahme eines Gases als Probe im Sinne der vorliegenden Anmeldung. Dazu verfügt die Probenzelle 6 über einen Gaseinlass 7 und einem Gasauslass 8, wobei Gaseinlass 7 und Gasauslass 8 jeweils über Schläuche 9 mit der Umgebung verbunden sind. Die Schläuche 9 dienen der Zu- und Abführung des Probengases in und aus der Probenzelle 6.

Die beschriebene Anordnung dient dazu, in einer gasförmigen in der Probenzelle 6 aufgenommenen Probe mehrere voneinander verschiedene Moleküle als Zielgase zu identifizieren und deren Konzentration zu bestimmen.

Die Anregungsstrahlung des Glühstrahlers 2 ist spektral breitbandig, sodass die Anregungsstrahlung 10 eine Vielzahl von Anregungsfrequenzen aufweist. In der dargestellten Ausführungsform hat der Glühstrahler eine Bandbreite von 5.000 cm⁻¹.

Die die Amplitude der von dem Glühstrahler 2 emittierten Anregungsstrahlung 10 wird mithilfe des Chopper-Rades 3 periodisch moduliert. In der beschriebenen Ausführungsform beträgt die Modulationsfrequenz 5 kHz.

Die Anregungsstrahlung 10 wird über einen ersten ellipsoidförmigen Hohlspiegel 11 kollimiert und auf das Gitter 4 geleitet. Das Gitter 4 bewirkt aufgrund seiner Dispersion eine räumliche Aufspaltung der einzelnen Anregungsfrequenzen.

Mithilfe eines fokussierenden Hohlspiegels 12 wird die räumlich nach den Anregungsfrequenzen aufgespaltene Anregungsstrahlung 10 in die Probenzelle 6 und damit in das Probengas hinein fokussiert. Wie in Figur 1 schematisch angedeutet werden dabei die unterschiedlichen Anregungsfrequenzen der Anregungsstrahlung 10 auf unterschiedliche, auf einer Linie senkrecht zur Ausbreitungsrichtung der Strahlung 10 liegende Anregungsorte 13, 14, 15 innerhalb der Probenzelle 6 bzw. der Probe fokussiert.

Die Wände 16 der Probenzelle 6 sind für die Anregungsstrahlung 10 transparent und die Anregungsstrahlung 10 wird durch die Probenzelle 6 transmittiert und diejenige Strahlung, die nicht von der Probe absorbiert wird, wird in einem Strahlabsorber 17 außerhalb und akustisch von der Probenzelle 6 isoliert absorbiert.

In der dargestellten Ausführungsform ist schematisch gezeigt, dass die Anregungsstrahlung 10 drei Anregungsfrequenzen enthält, die an die drei voneinander verschiedenen Anregungsorten 13, 14, 15 fokussiert werden. Alle drei exemplarisch gezeigten Anregungsorte 13, 14, 15 werden gleichzeitig mit der Anregungsstrahlung 10 beleuchtet.

Absorbiert das Probengas die Anregungsstrahlung bei einer der drei Frequenzen, so wird am entsprechenden Anregungsort 13, 14 oder 15 in dem Probengas eine Schallwelle generiert, welche die Modulationsfrequenz der Anregungsstrahlung 10 als Schallfrequenz aufweist.

In Abhängigkeit von der Zusammensetzung des Probengases 6 wird dieses eine Auswahl der drei Anregungsfrequenzen absorbieren. In Abhängigkeit davon wird die Amplitude der an den drei Anregungsorten 13, 14, 15 generierten Schallwellen unterschiedlich ausfallen. Für jedes Probengas entsteht also eine charakteristische Überlagerung von drei an den drei Anregungsorten 13, 14, 15 erzeugten Schallwellen.

Die Überlagerung dieser maximal drei Schallwellen von den drei Anregungsorten wird ortsaufgelöst mithilfe der drei Mikrofone 5 erfasst. Aus der Verteilung der Amplituden und/oder Phasen der jedes der drei Mikrofone 5 erreichenden Schallwellen kann auf die Absorption an den drei Anregungsorten 13, 14, 15 rückgeschlossen werden. Da aber die Schallwellen, die an den drei Anregungsorten 13, 14, 15 generiert werden, charakteristisch dafür sind, welche Zusammensetzung das Probengas hat, erlaubt die Erfassung der Schallwellen an den drei Erfassungsorten 18, 19, 20 der drei Mikrofone 5 einen Rückschluss auf ein Maß für die Absorption des Probengases in Abhängigkeit von der Anregungsfrequenz der Anregungsstrahlung 10.

Damit die von den einzelnen Mikrofonen 5 an den drei Erfassungsorten 17, 18, 19 erfassten Schallwellen möglichst charakteristisch für die jeweilige Absorption sind, wird in der dargestellten Ausführungsform die Anregungsstrahlung hart in die Probenzelle 6 fokussiert.

Die abbildende Optik des Spektrometers 1 in Form des fokussierenden Hohlspiegels 12 die räumlich aufgespaltene Anregungsstrahlung 10 entlang einer Linie in der Probe. Dabei erzeugt der Hohlspiegel einen möglichst eng lokalisierten Bereich hoher Leistungsdichte, so dass die Orte der Entstehung der Schallwellen ebenfalls eng lokalisiert sind. Der Hohlspiegel 12 erzeugt eine Tiefenschärfe, die kleiner ist als ein Zehntel einer maximalen Ausdehnung der Linie senkrecht zu der Strahlrichtung. Dabei ist die die Tiefenschärfe eine Länge eines Bereichs in Strahlrichtung ist, indem die Flächenleistungsdichte der Anregungsstrahlung größer oder gleich der Hälfte der maximalen Flächenleistungsdichte der abgebildeten Anregungsstrahlung 10 ist.

In der gezeigten Ausführungsform erfolgt das Bestimmen des Maßes für die Absorption der Anregungsstrahlung 10 durch die Probe in Abhängigkeit von der Mehrzahl von Anregungsfrequenzen mit Hilfe einer Mustererkennung in einem künstlichen neuronalen Netzwerk. Das künstliche neuronale Netzwerk wurde zuvor mit einem Trainingsdatensatz trainiert.

Zum Erstellen des Trainingsdatensatz mit einer Mehrzahl von Datenblöcken wird die zuvor beschriebene Messung an einer Mehrzahl von Kalibrierproben mit jeweils einer bekannten Absorption in Abhängigkeit von der Anregungsfrequenz durchgeführt.

Für jede Kalibrieprobe wird eine räumliche Trainingsverteilung zumindest der Amplitude oder der Phase über die Mehrzahl von Erfassungspositionen für die Mehrzahl von Anregungsfrequenzen als Datenblock des Trainingsdatensatzes erzeugt.

Während des Trainierens des künstlichen neuronalen Netzwerks wird der Trainingsdatensatz durch das Netzwerk verarbeitet, um ein Maß für die Absorption der Anregungsstrahlung 10 durch die Probe in Abhängigkeit von der Mehrzahl von Anregungsfrequenzen als Ausgabedaten zu erhalten. Die Ausgabedaten des Netzwerks werden mit dem für die jeweilige Kalibrierprobe bekannten Maß für die Absorption der Anregungsstrahlung 10 in Abhängigkeit von der Mehrzahl von Anregungsfrequenzen verglichen, um eine Fehlerfunktion zu erhalten. Durch Anpassen der Topologie des künstlichen neuronalen Netzwerks wird die Fehlerfunktion minimiert.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit es nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombination wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmalen in unterschiedlichen Ansprüchen beansprucht sind, schließt ihre Kombination nicht aus. Bezugszeichen in den Ansprüchen sind nicht als Beschränkung des Schutzbereichs gedacht.

In einer Ausführungsform der Erfindung ist die Probenzelle resonant für die durch die Anregungsstrahlung an den Anregungsorten erzeugten Schallwellen. Auf diese Weise kann eine Signalüberhöhung bei der Erfassung der Schallwellen an den Erfassungsorten bewirkt werden.

### Bezugszeichen

- 1: photoakustisches Spektrometer
- 2: Glühstrahler
- 3: Chopper-Rad
- 4: Gitter
- 5: Mikrofon
- 6: Probenzelle
- 7: Gaseinlass
- 8: Gasauslass
- 9: Schlauch
- 10: Anregungsstrahlung
- 11,12: Hohlspiegel
- 13, 14, 15: Anregungsort
- 16: Wände
- 17: Strahlabsorber
- 18, 19, 20: Erfassungsposition

## Patentansprüche

1. Verfahren zur Spektroskopie an einer Probe mit den Messschritten,
Erzeugen elektromagnetischer Anregungsstrahlung (10) mit einer Mehrzahl von über eine Anregungsbandbreite verteilten Anregungsfrequenzen,
Modulieren einer Intensität der Anregungsstrahlung (10) bei jeder aus der Mehrzahl von Anregungsfrequenzen mit einer Modulationsfrequenz,
räumliches Aufspalten der Anregungsstrahlung (10) in Abhängigkeit von der Mehrzahl von Anregungsfrequenzen,
Beleuchten der Probe mit der räumlich aufgespaltenen Anregungsstrahlung (10) an einer Mehrzahl von Anregungsorten (13, 14, 15) in oder auf der Probe, so dass die Mehrzahl von Anregungsfrequenzen der Anregungsstrahlung (10) über die Mehrzahl von Anregungsorten (13, 14, 15) in oder auf der Probe verteilt ist,
an einer Mehrzahl von Erfassungspositionen (18, 19, 20) Erfassen zumindest einer Amplitude oder einer Phase einer Mehrzahl von Schallwellen, die von der Anregungsstrahlung (10) an der Mehrzahl von Anregungsorten (13, 14, 15) in oder auf der Probe erzeugt werden, und
Bestimmen eines Maßes für eine Absorption der Anregungsstrahlung (10) durch die Probe in Abhängigkeit von der Mehrzahl von Anregungsfrequenzen aus einer räumlichen Verteilung zumindest der Amplitude oder der Phase der Mehrzahl von Schallwellen über die Mehrzahl von Erfassungspositionen (18, 19, 20).

2. Verfahren nach dem vorhergehenden Anspruch, wobei das Beleuchten der Probe gleichzeitig mit der Mehrzahl von Anregungsfrequenzen erfolgt.

3. Verfahren nach einem der vorhergehenden Ansprüche, wobei das Beleuchten der Probe derart erfolgt, dass ein Anregungsvolumen der Probe in dem die Anregungsorte (13, 14, 15) liegen, in einer ersten Richtung länger ist als in einer zu der ersten Richtung senkrechten zweiten Richtung, wobei die Mehrzahl von Anregungsfrequenzen in der ersten Richtung verteilt ist.

4. Verfahren nach einem der vorhergehenden Ansprüche, wobei das Modulieren der Intensität der Anregungsstrahlung (10) bei jeder aus der Mehrzahl von Anregungsfrequenzen mit der gleichen Modulationsfrequenz erfolgt.

5. Verfahren nach einem der vorhergehenden Ansprüche, wobei das Verfahren zusätzlich vor den Messschritten Kalibrierschritte aufweist mit
Erzeugen elektromagnetischer Anregungsstrahlung (10) mit der Mehrzahl der über die Anregungsbandbreite verteilten Anregungsfrequenzen,
Modulieren der Intensität der Anregungsstrahlung (10),
räumliches Aufspalten der Anregungsstrahlung (10) in Abhängigkeit von der Mehrzahl von Anregungsfrequenzen,
Beleuchten einer Kalibrierprobe mit einer bekannten Absorption in Abhängigkeit von der Anregungsfrequenz gleichzeitig mit der Mehrzahl von Anregungsfrequenzen oder nacheinander mit jeweils einer aus der Mehrzahl von Anregungsfrequenzen aus der räumlich aufgespaltenen Anregungsstrahlung (10) an der Mehrzahl von Anregungsorten (13, 14, 15) in oder auf der Kalibrierprobe, so dass die Mehrzahl von Anregungsfrequenzen der Anregungsstrahlung (10) über die Mehrzahl von Anregungsorten (13, 14, 15) in oder auf der Kalibrierprobe verteilt ist,
an der Mehrzahl von Erfassungspositionen Erfassen zumindest einer Amplitude oder einer Phase einer Mehrzahl von Schallwellen, die von der Anregungsstrahlung (10) gleichzeitig oder nacheinander an der Mehrzahl von Anregungsorten (13, 14, 15) in oder auf der Kalibrierprobe erzeugt werden,
Bestimmen einer räumlichen Vergleichsverteilung zumindest der Amplitude oder der Phase über die Mehrzahl von Erfassungspositionen für jede aus der Mehrzahl von Anregungsfrequenzen,
Wiederholen der vorhergehenden Kalibrierschritte für eine Mehrzahl von voneinander verschiedenen Kalibrierproben mit jeweils einer bekannten Absorption in Abhängigkeit von der Anregungsfrequenz und
Erstellen einer Zuordnung zwischen jeder der für die Mehrzahl von Kalibrierproben erfassten räumlichen Vergleichsverteilungen zumindest der Amplitude oder der Phase und jeweils einem Maß für die Absorption der Anregungsstrahlung (10) bei der Mehrzahl von Anregungsfrequenzen,
wobei das Bestimmen des Maßes für die Absorption der Anregungsstrahlung (10) durch die Probe in Abhängigkeit von der Mehrzahl von Anregungsfrequenzen einen Vergleich der für die Probe erfassten räumlichen Verteilung zumindest der Amplitude oder der Phase mit den Vergleichsverteilungen umfasst.

6. Verfahren nach einem der Ansprüche 1 bis 4, wobei das Bestimmen des Maßes für die Absorption der Anregungsstrahlung (10) durch die Probe in Abhängigkeit von der Mehrzahl von Anregungsfrequenzen eine Mustererkennung mit einem künstlichen neuronalen Netzwerk umfasst, wobei das künstliche neuronale Netzwerk vor den Messschritten mit einem Trainingsdatensatz trainiert wird, wobei der Trainingsdatensatz eine Mehrzahl von Datenblöcken aufweist und wobei der Trainingsdatensatz mit folgenden Trainingsschritten erstellt wird
Erzeugen elektromagnetischer Anregungsstrahlung (10) mit der Mehrzahl der über die Anregungsbandbreite verteilten Anregungsfrequenzen,
Modulieren der Intensität der Anregungsstrahlung (10),
räumliches Aufspalten der Anregungsstrahlung (10) in Abhängigkeit von der Mehrzahl von Anregungsfrequenzen,
Beleuchten einer Kalibrierprobe mit einer bekannten Absorption in Abhängigkeit von der Anregungsfrequenz mit der Mehrzahl von Anregungsfrequenzen aus der räumlich aufgespaltenen Anregungsstrahlung (10) an der Mehrzahl von Anregungsorten (13, 14, 15) in oder auf der Kalibrierprobe, so dass die Mehrzahl von Anregungsfrequenzen der Anregungsstrahlung (10) über die Mehrzahl von Anregungsorten (13, 14, 15) in oder auf der Kalibrierprobe verteilt ist,
an der Mehrzahl von Erfassungspositionen Erfassen zumindest der Amplitude oder der Phase einer Mehrzahl von Schallwellen, die von der Anregungsstrahlung (10) an der Mehrzahl von Anregungsorten (13, 14, 15) in oder auf der Kalibrierprobe erzeugt werden,
Bestimmen einer räumlichen Trainingsverteilung zumindest der Amplitude oder der Phase über die Mehrzahl von Erfassungspositionen für die Mehrzahl von Anregungsfrequenzen als Datenblock des Trainingsdatensatzes, und
Wiederholen der vorhergehenden Trainingsschritte für eine Mehrzahl von voneinander verschiedenen Kalibrierproben mit jeweils einer bekannten Absorption in Abhängigkeit von der Anregungsfrequenz.

7. Verfahren nach einem der vorhergehenden Ansprüche, wobei das Modulieren der Intensität der Anregungsstrahlung (10) impulsförmig, sinusförmig oder rechteckförmig erfolgt.

8. Photoakustisches Spektrometer (1) zum Bestimmen einer wellenlängenabhängigen Absorption einer Probe mit
einer Quelle (2), die derart eingerichtet ist, dass die Quelle (2) in einem Betrieb des Spektrometers (1) elektromagnetischer Anregungsstrahlung (10) mit einer Mehrzahl von über eine Anregungsbandbreite verteilten Anregungsfrequenzen erzeugt und abstrahlt,
einem Modulator (3), der derart eingerichtet und angeordnet ist, dass der Modulator (3) in dem Betrieb des Spektrometers (1) eine Intensität aller Anregungsfrequenzen der von der Quelle (2) abgestrahlten Anregungsstrahlung (10) mit einer Modulationsfrequenz moduliert,
einem dispersiven Element (4), das derart ausgestaltet und angeordnet ist, dass das dispersive Element (4) in dem Betrieb des Spektrometers (1) die Anregungsstrahlung (10) in Abhängigkeit von der Mehrzahl von Anregungsfrequenzen räumlich aufspaltet,
einer Detektionseinrichtung (5) und
einer Auswerteeinrichtung, wobei die Auswerteeinrichtung derart wirksam mit der Detektionseinrichtung (5) verbunden ist, dass die Auswerteeinrichtung in dem Betrieb des Spektrometers (1) ein Messsignal von der Detektionseinrichtung (5) erhält, wobei die Quelle (2), der Modulator (3) und das dispersive Element (4) derart angerordnet und eingerichtet sind, dass in dem Betrieb des Spektrometers (1) die Probe derart mit der räumlich aufgespaltenen Anregungsstrahlung (10) an einer Mehrzahl von Anregungsorten (13, 14, 15) in oder auf der Probe beleuchtbar ist, so dass die Mehrzahl von Anregungsfrequenzen der Anregungsstrahlung (10) über die Mehrzahl von Anregungsorten (13, 14, 15) in oder auf der Probe verteilt ist,
wobei die Detektionseinrichtung (5) derart eingerichtet und angeordnet ist, dass mit der Detektionseinrichtung (5) in dem Betrieb der Vorrichtung zumindest eine Amplitude oder eine Phase einer Mehrzahl von Schallwellen, die von der Anregungsstrahlung (10) an der Mehrzahl von Anregungsorten (13, 14, 15) erzeugt wurden, an einer Mehrzahl von Erfassungspositionen (18, 19, 20) erfassbar ist, und
wobei die Auswerteeinrichtung derart eingerichtet ist, dass die Auswerteeinrichtung in dem Betrieb des Spektrometers (1) ein Maß für eine Absorption der Anregungsstrahlung (10) durch die Probe in Abhängigkeit von der Mehrzahl von Anregungsfrequenzen aus einer räumlichen Verteilung zumindest der Amplitude oder der Phase über die Mehrzahl von Erfassungspositionen (18, 19, 20) bestimmt.

9. Photoakustisches Spektrometer (1) nach dem vorhergehenden Anspruch, wobei die Detektionseinrichtung (5) eine Mehrzahl von Schallmesseinrichtungen aufweist, wobei an jeder der Erfassungspositionen einen Schallmesseinrichtung angeordnet ist und wobei die Schallmesseinrichtungen laufzeitsensitiv sind.

10. Photoakustisches Spektrometer (1) nach Anspruch 8 oder 9, wobei die Quelle (2) ein Glühstrahler, eine Blitzlampe oder eine Superkontinuum-Quelle ist.

11. Photoakustisches Spektrometer (1) nach einem der Ansprüche 8 bis 10, wobei das Spektrometer (1) eine Probenkammer (6) zum Aufnehmen der Probe aufweist.

12. Photoakustisches Spektrometer (1) nach einem der Ansprüche 8 bis 11, wobei das Spektrometer (1) eine abbildende Optik (12) zum Abbilden der räumlich aufgespaltenen Anregungsstrahlung (10) entlang einer Linie senkrecht zu einer Strahlrichtung der Anregungsstrahlung auf die Probe aufweist, wobei die abbildende Optik (12) eine Tiefenschärfe erzeugt, wobei die Tiefenschärfe eine Länge eines Bereichs in Strahlrichtung ist, in dem die Flächenleistungsdichte der Anregungsstrahlung größer oder gleich der Hälfte einer maximalen Flächenleistungsdichte der abgebildeten Anregungsstrahlung ist, und wobei die Tiefenschärfe kleiner ist als 1/10 einer maximalen Ausdehnung der Linie senkrecht zu der Strahlrichtung.
